# EUROPEAN PATENT SPECIFICATION

(11) **EP 1 889 871 B1**
(45) Date of publication and mention of the grant of the patent: **27.07.2011**
(21) Application number: 06731090.4
(22) Date of filing: 04.04.2006
(51) Int. Cl.: C08L 23/00, C08K 3/08, C08K 5/134, C08K 5/3432

(54) **RESIN COMPOSITION CONTAINING ALUMINUM PIGMENT**
ALUMINIUMPIGMENT ENTHALTENDE HARZZUSAMMENSETZUNG
COMPOSITION DE RÉSINE CONTENANT UN PIGMENT À BASE D'ALUMINIUM

(30) Priority: 09.06.2005 JP 2005169664
(43) Date of publication of application: 20.02.2008
(73) Proprietor: Adeka Corporation, Tokyo 116-0012 (JP)
(72) Inventor: YUKINO, Toshinori, ASAHI DENKA Co., Ltd., Saitama-shi, Saitama 336-0022 (JP); FUKUSHIMA, Mitsuru, ASAHI DENKA Co., Ltd., Saitama-shi, Saitama 336-0022 (JP); TANJI, Naoko, ASAHI DENKA Co., Ltd., Saitama-shi, Saitama 336-0022 (JP); YOKOTA, Akiko, ASAHI DENKA Co., Ltd., Saitama-shi, Saitama 336-0022 (JP)
(74) Representative: Jones, Helen M.M.
(86) International application number: PCT/JP2006/307142
(87) International publication number: WO 2006/132026

(56) References cited:
- JP-A- 8 239 527
- JP-A- 08 239 527
- JP-A- 08 239 549
- JP-A- 11 310 667
- JP-A- 2000 159 940
- JP-A- 2005 048 077
- JP-A- 2005 048 077
- JP-A- 2005 054 105
- JP-A- 2005 054 105

## Description

### Technical Field

The present invention relates to a resin composition containing an aluminum pigment, and more particularly, a resin composition containing an aluminum pigment excellent in weather-resisting property and capable of suitably being utilized for external coating of automobiles or the like.

### Background Art

A resin composition utilizable for external coating of automobiles is exposed to strong UV-rays outdoors and also to high temperature in summer so that the composition will be apt to be deteriorated. It is necessary, therefore, to stabilize the composition with a hindered amine compound, a UV-protecting agent or the like.

Bis(2,2,6,6-tetramethylpiperidyl) sebacate and bis(1-octoxy-2,2,6,6-tetramethylpiperidyl) sebacate are proposed in Patent Literature 1 and Patent Literature 2, respectively, as such a hindered amine compound. In addition, a resin composition jointly using a hindered amine compound and a benzoate type compound is proposed as a resin composition needing high stabilization in Patent literature 3, 4 and 5.
Patent Literature 1: Japanese Patent Publn. No. Sho. 46-42618 (claims, etc.),
Patent Literature 2: Japanese Laid-open Patent Appln. No. Hei. 1-113368 (claims, etc.),
Patent Literature 3: Japanese Laid-open Patent Appln. No. Hei. 4-80244, (claims, Examples 1 and 2, etc.),
Patent Literature 4: Japanese Laid-open Patent Appln. No. 2005-48077, (claims, etc,), and
Patent Literature 5: Japanese Laid-open Patent Appln. No. 2005-54105, (claims, etc.).

### Disclosure of the Invention

### Problems to be Solved by the Invention

The weather-resisting property of the resin composition can be improved as mentioned above by incorporating the composition with a hindered amine or a UV-protecting agent. In case the resin composition is incorporated with an aluminum pigment for imparting metallic luster to the composition, however, the improving effect in weather-resisting property attained by the hindered amine or a combination of the hindered amine with the UV-protecting agent in the absence of the aluminum pigment becomes inferior, and as the result, it was necessary to incorporate these additives in a larger amount into the composition. What is more, the hindered amine has poor compatibility with polyolefin so that incorporation of the hindered amine in a larger amount would incur blooming of the amine out of the surface of the composition to spoil its appearance, thus failing to exhibit sufficient stabilizing effect.

It is therefore an object of the present invention to provide a resin composition containing an aluminum pigment possessing excellent weather-resisting property even in case of incorporating an aluminum pigment.

### Means for Solving the Problems

As a result of extensive research for solving the aforesaid problems, it has now been found that the foregoing object can be achieved by incorporating a hindered amine having a specific structure and a benzoate type compound having a specific structure into a resin composition containing an aluminum pigment. The present invention has been accomplished by the above finding.

In accordance with the present invention, there is provided a resin composition containing an aluminum pigment which comprises 100 parts by weight of a polyolefin type resin incorporated with 0.5-10 parts by weight of an aluminum pigment to produce a metallic composition, the metallic composition having further been incorporated with 0.001-10 parts by weight of a hindered amine compound of the following general formula: 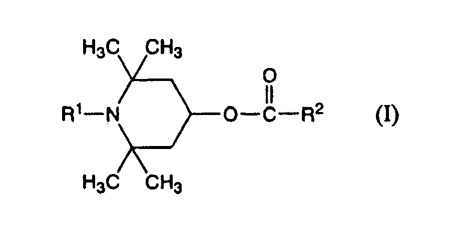 wherein R¹ stands for hydrogen atom, hydroxy group, alkyl group having 1-30 carbon atoms, hydroxyalkyl group having 1-30 carbon atoms, alkoxy group having 1-30 carbon atoms, hydoxyalkoxy group having 1-30 carbon atoms, or an oxy radical, R² stands for alkyl group having 1-30 carbon atoms or alkenyl group having 2-30 carbon atoms, and 0.001-10 parts by weight of a benzoate type compound of the following general formula: 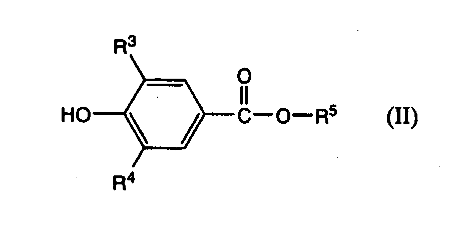 wherein R³ and R⁴ each independently stands for hydrogen atom, alkyl group having 1-12 carbon atoms, or arylalkyl group having 7-30 carbon atoms, and R⁵ stands for alkyl group having 1-30 carbon atoms. Throughout the specification, the alkyl group may be either of linear or branched chain and may form a ring.

For the resin composition containing an aluminum pigment of the present invention, a compound (I) wherein R² stand for alkyl group with 12-22 carbon atoms can preferably be used. In addition, a compound (II) wherein R⁵ stands for alkyl group with 6-24 carbon atoms can also preferably be used.

### Advantages

The resin composition containing an aluminum pigment of the present invention is excellent in weather-resisting property when used as an external coating of automobiles, and can be used suitably as a polyolefin type resin composition furnished with metallic luster.

### Best Mode for Carrying Out the Invention

Below are detailed explanations on preferable embodiments in practice of the invention.

Illustrative of the polyolefin type resins used for the resin composition containing an aluminum pigment of the present invention are homopolymers or copolymers of α-olefins such as polypropylene, low density polyethylene, linear low density polyethylene, high density polyethylene, polybutene-1, poly-3-methylpentene, poly-4-methylpentene, and ethylene-propylene copolymer, and copolymers of these α-olefins with compound having plural unsaturated bonds such as conjugated dienes and non-conjugated dienes.

The polyolefin type resins may permit difference in exhibition of the stabilizing effect according to the various factors such as stereoregularity, specific gravity, the sort of polymerization catalyst, presence or absence or degree of removal of polymerization catalyst, degree of crystallinity, polymerization conditions such as temperature or pressure, sort of crystal, size of lamellar crystal measured by X-ray small angle diffraction, aspect ratio of crystal, solubility into aromatic or aliphatic solvent, viscosity of solution, melt viscosity, average molecular weight, degree of distribution of molecular weight, how many peaks in molecular weight distribution, difference in random or block type, and proportion of each monomer in case of copolymer. In any of the cases selected, the resin is applicable to the present invention.

With respect to the aluminum pigment utilizable for the present invention, there is no special limitation in whatever known aluminum powder so far as it is used as an aluminum pigment. It may be in the form of powder or paste, regardless of the method of preparation, shape, or presence or absence of surface treatment. The proportion of the aluminum pigment is 0.5-100 parts by weight, preferably 1-5 parts by weight per 100 parts by weight of the polyolefin type resin. In case the proportion is less than 0.5 parts by weight, the effect attained by incorporation of the aluminum pigment will not be exhibited. On the other hand, if the proportion exceeds 10 parts by weight, a part of the pigment will be spouted out of the surface of the resin, thus being apt to spoil its appearance.

The hindered amine compound used for the present invention is represented by the general formula (I): 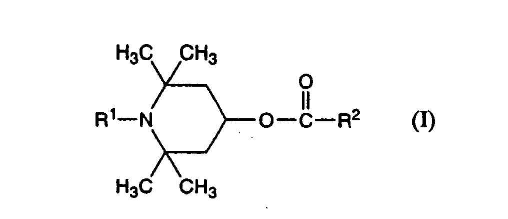 wherein R¹ stands for hydrogen atom, hydroxy group, alkyl group having 1-30, preferably 1-18 carbon atoms, hydroxyalkyl group having 1-30, preferably 2-18 carbon atoms, alkoxy group having 1-30, preferably 2-18 carbon atoms, hydroxyalkoxy group having 1-30, preferably 2-18 carbon atoms, or an oxy radical, R² stands for alkyl group having 1-30, preferably 12-22 carbon atoms or alkenyl group having 2-30, preferably 12-22 carbon atoms

Illustrative of the alkyl group having 1-30 carbon atoms of R¹ and R² in the above general formula (I) are, for example, methyl, ethyl, propyl, isopropyl, butyl, isobutyl, *sec*-butyl, *tert*-butyl, pentyl, *sec*-pentyl, *tert*-pentyl, hexyl, heptyl, octyl, isooctyl, 2-ethylhexyl, *tert*-octyl, nonyl, isononyl, decyl, undecyl, dodecyl, tridecyl, tetradecyl, pentadecyl, hexadecyl, heptadecyl, and octadecyl.

Illustrative of the hydroxyalkyl group having 1-30 carbon atoms of R¹ in the above general formula (I) are, for example, a hydroxy-substitute of the aforesaid alkyl group such as hydroxyethyl, 2-hydroxypropyl, or 3-hydroxypropyl. Illustrative of the alkoxy group having 1-30 carbon atoms of R¹ are those corresponding to the aforesaid alkyl groups, such as methoxy, ethoxy, propoxy, isopropoxy, butoxy, octoxy, and 2-ethylhexyloxy. Illustrative of the hydroxyalkoxy group having 1-30 carbon atoms of R¹ are those corresponding to the aforesaid alkoxy groups, such as hydroxyethyloxy,2-hydroxypropyloxy, 3-hydroxypropyloxy, 4-hydroxybutyloxy, 2-hydroxy-2-methylpropyloxy, and 6-hydroxyhexyloxy.

Illustrative of the alkenyl group having 2-30 carbon atoms of R² in the general formula (I) are vinyl, propenyl, butenyl, hexenyl, and oleyl. The alkenyl group may be either linear or branched, while no special limitation exists in the position of the double bond.

More particularly, the following compounds may be mentioned as the compound represented by the general formula (I), but it is to be construed that the present invention is not limited by these compounds.

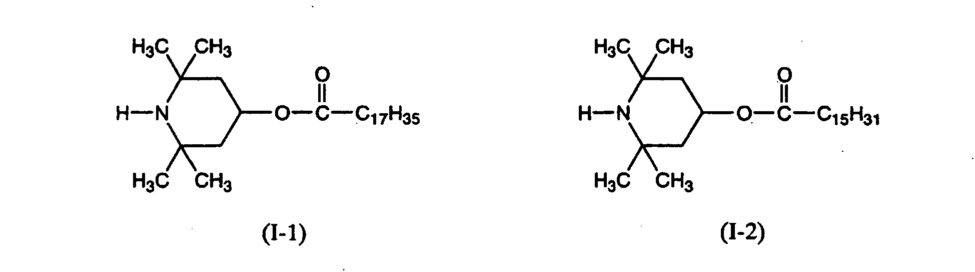

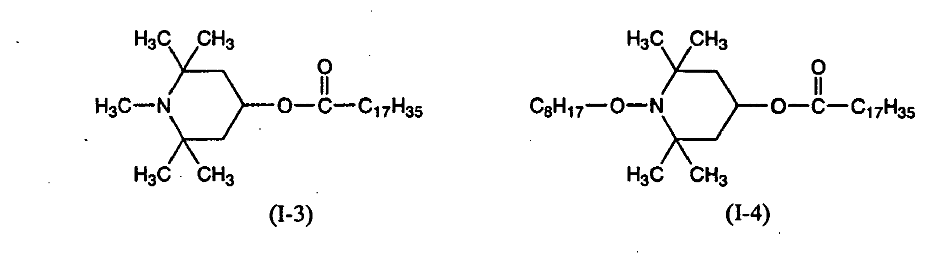

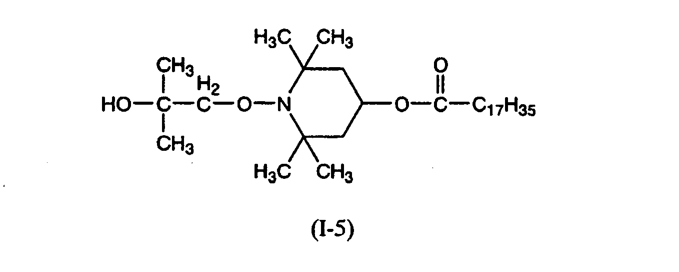

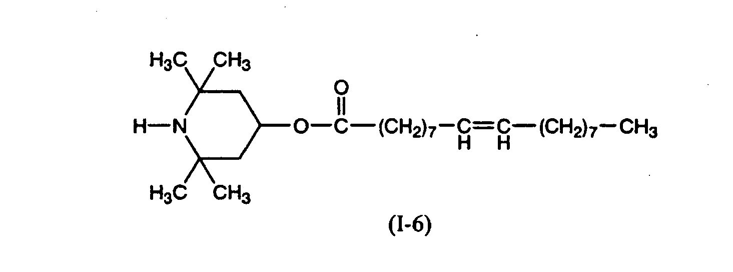

A process for the synthesis of the hindered amine compounds represented by the general formula (I) is not especially limited, but these compounds can be synthesized according to the procedure of usual organic synthesis. As a method for purification, methods wherein distillation, recrystallization, reprecipitation, and the use of a filtering material or adsorbent is carried out can properly be used at need. In addition, the compounds usually available from the market at cheaper price are chiefly in the form of a mixture so that they may be utilized singly or as a mixture irrespective of the process for preparation, composition, melting point, acid value or the like.

The proportion of the hindered amine compounds of the above general formula (I) is 0.001-10 parts by weight, preferably 0.01-5 parts by weight per 100 parts by weight of the polyolefin type resin. If the proportion of the hindered amine compound is less than 0.001 parts by weight, a satisfactory stabilizing effect will not be expected. On the other hand, an amount of more than 10 parts by weight will cause problems such as deterioration of physical nature of the resin or spoiling of appearance of the resin composition due to blooming.

The benzoate type compounds used in the present invention are represented by the following general formula (II) : 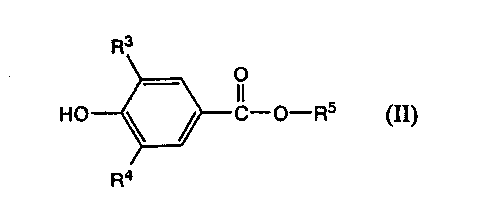 wherein R³ and R⁴ each independently stands for hydrogen atom, alkyl group of 1-12, preferably 1-5 carbon atoms or arylalkyl group having 7-30, preferably 7-9 carbon atoms, and R⁵ stands for alkyl group having 1-30, preferably 6-24 carbon atoms.

Illustrative of the alkyl group having 1-12 carbon atoms of R³ and R⁴ in the above general formula (II) are, for example, methyl, ethyl, propyl, isopropyl, butyl, *sec*-butyl, *tert*-butyl, pentyl, hexyl, octyl; a cycloalkyl group such as cyclopentyl or cyclohexyl; and arylalkyl group such as benzyl, phenylethyl, 1-methyl-1-phenylethyl.

Illustrative of the alkyl group having 1-30 carbon atoms of R⁵ in the general formula (II) are, for example, methyl, ethyl, propyl, isopropyl, butyl, *sec*-butyl, *tert-*butyl, pentyl, hexyl, octyl, nonyl, decyl, undecyl, dodecyl, tridecyl, tetradecyl, pentadecyl, hexadecyl, and octadecyl.

More particularly, the following compounds may be mentioned as the compound represented by the general formula (II), but it is to be construed that the present invention is not limited by these compounds.

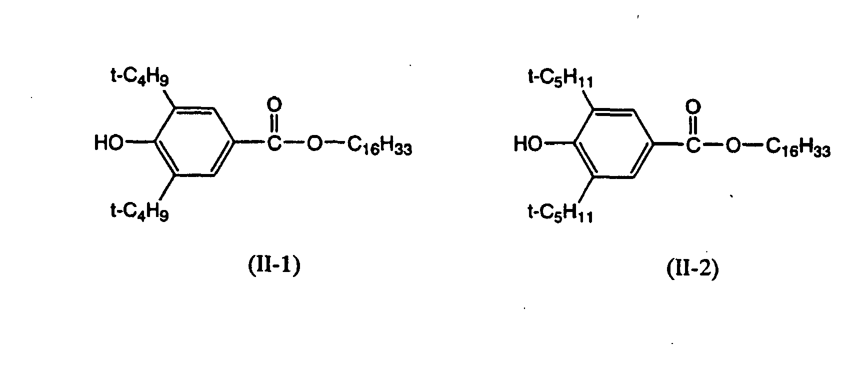

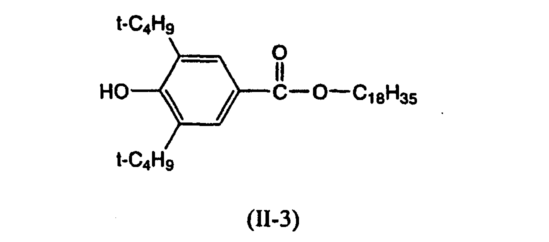

A process for synthesis of the benzoate type compounds represented by the general formula (II) is not especially limited, but these compounds can be synthesized according to the procedure of usual organic synthesis. As a method for purification, methods wherein distillation, recrystallization, reprecipitation, and the use of a filtering material or adsorbent is carried out can properly be used at need. The compounds may further be used singly or as a mixture.

The proportion of the benzoate type compounds of the above general formula (II) is 0.001-10 parts by weight, preferably 0.01-5 parts by weight per 100 parts by weight of the polyolefin type resin. If the proportion of the benzoate type compound is less than 0.001 part by weight, a satisfactory stabilizing effect will not be expected. On the other hand, an amount of more than 10 parts by weight will cause problems such as deterioration of physical nature of the resin or spoiling of appearance of the resin composition due to blooming.

There is no particular limitation in the method for incorporating the resin with such resin additives so that any known technology can be used wherein resins are incorporated with stabilizers. Such methods may be any of the methods wherein stabilizers are previously added to a polymerization system where polyolefin is polymerized, wherein stabilizers are added in the course of polymerization, and wherein stabilizers are added after the polymerization. In case the stabilizers are added after polymerization, there are several methods wherein the stabilizers are mixed with powders or pellets of a polyolefin resin to be stabilized in a Henshell mixer or the like and the mixture is then kneaded in an extruder, wherein the stabilizers in a solution are sprayed onto the polyolefin type resin for impregnating it with the stabilizers, and wherein the stabilizers are used after the resin has been processed to master batch. Further, there is no special limitation in the sort of processing machines used, processing temperature, and cooling condition after processing, and it is desirable to select conditions so as to fit the physical properties of the resin to the intended use. The resin additives of the present invention may be used in granular form singly or together with other additives.

The resin composition containing an aluminum pigment of the present invention is preferably used, if necessary, jointly with various ingredients usually utilizable for each resin. Examples of such ingredients include, for example, antioxidants of phenol type, antioxidants of sulfur type, antioxidants of phosphorus type, other UV-protecting agents, other hindered amine compounds, nucleating agents, fire retardants, fire retardant assistants, lubricants, fillers, fibrous fillers, metal soaps, hydrotalcites, antistatic agents, pigments, and dyestuffs.

Illustrative of the aforesaid antioxidants of phenol type are, for example, 2,6-di-*tert*-butyl-p-cresol, 2,6-diphenyl-4-octadecyloxyphenol, distearyl(3,5-di-*tert*-butyl-4-hydroxybenzyl) phosphonate, 1,6-hexamethylene-bis{(3,5-di-*tert-*butyl-4-hydroxy-phenyl) propionamide}, 4,4'-thio-bis(6-*tert*-butyl-m-cresol), 2,2'-methylene-bis(4-methyl-6-*tert-*butylpenol), 2,2'-methylene-bis(4-ethyl-6-*tert*-butylphenol), 4,4'-butylidene-bis(6-*tert*-butyl-m-cresol), 2,2'-ethylidene-bis(4,6-di-*tert*-butylphenol), 2,2'-ethylidene-bis (4-*sec*-butyl-6-*tert*-butylphenol), 1,1,3-tris(2-methyl-4-hydroxy-5-*tert-*butylphenyl)butane, 1,3,5-tris(2,6-dimethyl-3-hydroxy-4-*tert*-butylbenzyl)isocyanurate, 1,3,5-tris(3,5-di-*tert*-butyl-4-hydroxybenzyl)-2,4,6-trimethylbenzene, 2-*tert*-butyl-4-methyl-6-(2-acryloyloxy-3-*tert*-butyl-5-methylbenzyl)phenol, stearyl(3,5-di-*tert*-butyl-4-hydroxyphenyl)propionate, thiodiethyleneglycol-bis{(3,5-di-*tert-*butyl-4-hydroxyphenyl) propionate}, 1,6-hexamethylene-bis{(3,5-di-*tert-*butyl-4-hydroxyphenyl)propionate}, bis{3,3-bis(4-hydroxy-3-*tert-*butylphenyl)butyric acid}glycol ester, bis{2-*tert*-butyl-4-methyl-6-(2-hydroxy-3-*tert*-butyl-5-methylbenzyl)phenyl} terephthalate, 1,3,5-tris{(3,5-di*-tert*-butyl-4-hydroxy-phenyl) propionyl-oxyethyl}isocyanurate, 3,9-bis[1,1-dimethyl-2-{(3-*tert*-butyl-4-hydroxy-5-methylphenyl)propionyloxy}ethyl]-2,4,8,10-tetraoxa-spiro[5.5]undecane, and triethyleneglycol-bis{(3-*tert*-butyl-4-hydroxy-5-methylphenyl)propionate}. The proportion of the antioxidant is preferably 0.001-10 parts by weight, and more preferably 0.05-5 parts by weight per 100 parts by weight of the polyolefin type resin.

Illustrative of the aforesaid antioxidants of sulfur type are, for example, dialkyl thiodipropionates such as dilauryl thiodipropionate, dimyristyl thiodipropionate, and distearyl thiodipropionate, and polyol β-alkylmercapto propionates such as pentaerythritol tetra(β-dodecylmercapto propionate). The proportion of the antioxidant is preferably 0.001-10 parts by weight, and more preferably 0.05-5 parts by weight per 100 parts of the polyolefin type resin.

Illustrative of the aforesaid antioxidants of phosphorus type are, for example, tris-nonylphenyl phosphite, tris{2-*tert*-butyl-4-(3-*tert*-butyl-4-hydroxy-5-methyl-phenylthio)-5-methylphenyl} phosphite, tridecyl phosphite, octyldiphenyl phosphite, di(decyl)monophenyl phosphite, di(tridecyl) pentaerythritol diphosphite, di(nonylphenyl) pentaeythriol diphosphite, bis(2,4-di-*tert*-butylphenyl)-pentaerythritol diphosphite, bis(2,6-di-*tert*-butyl-4-methylphenyl) pentaerythritol diphosphite, bis(2,4,6-tri-*tert*-butylphenyl) pentaerythritol diphosphite, bis(2,4-dicumylphenyl) pentaerythritol diphosphite, tetra(tridecyl)isopropylidenediphenol diphosphite, tetra(tridecyl)-4,4'-n-butylidene-bis(2-*tert-*butyl-5-methylphenol) diphosphite, hexa(tridecyl)-1,1,3-tris(2-methyl-4-hydroxy-5-*tert*-butylphenyl)butane triphosphite, tetrakis(2,4-di-*tert*-butylphenyl)biphenylene diphosphonite, 9,10-dihydro-9-oxa-10-phosphaphenanthrene-10-oxide, 2,2'-methylene-bis(4,6-*tert*-butylphenyl)-2-ethyl hexylphosphite, 2,2'-methylene-bis(4,6-*tert*-butylphenyl) octadecylphosphite, 2,2'-ethylidene-bis(4,6-di-*tert*-butyl phenyl) fluorophosphite, tris(2-[(2,4,8,10-tetrakis-*tert-*butyl-dibenzo[d,f][1,3,2]dioxa-phosphepin-6-yl)oxy]ethyl) amine, and a phosphite of 2-ethyl-2-butylpropyleneglycol and 2,4,6-tri-*tert*-butylphenol. The proportion of the antioxidant is preferably 0.001-10 parts by weight, and more preferably 0.05-5 parts by weight per 100 parts of the polyolefin type resin.

Illustrative of the aforesaid UV-absorbing agents are, for example, 2-hydroxybenzophenone compounds such as 2,4-dihydroxybenzophenone, 2-hydroxy-4-methoxybenzophenone, 2-hydroxy-4-octoxybenzophenone, and 5,5'-methylene-bis(2-hydroxy-4-methoxybenzophenone); 2-(2'-hydroxyphenyl)benzotriazole compounds such as 2-(2'-hydroxy-5'-methylphenyl)benzotriazole, 2-(2'-hydroxy-3',5'-di-*tert*-butylphenyl)-5-chlorobenzotriazole, 2-(2'-hydroxy-3'-*tert*-butyl-5'-methylphenyl)-5-chlorobenzotriazole, 2-(2'-hydroxy-5'-*tert*-octylphenyl)benzotriazole, 2-(2'-hydroxy-3',5'-dicumylphenyl)benzotriazole, and 2-(2'-hydroxy -3'-*tert-*butyl-5'-carboxy-phenyl)benzotriazole; benzoate compounds such as phenyl salicylate, resorcinol monobenzoate, 2,4-di-*tert*-butylphenyl-3,5-di-*tert*-butyl-4-hydroxybenzoate, and 2,4-di-*tert*-amylphenyl-3,5-di-*tert*-butyl-4-hydroxybenzoate; substituted oxanilide compounds such as 2-ethyl-2'-ethoxyoxanilide, and 2-ethoxy-4'-dodecyloxanilide; cyanoacrylate compounds such as ethyl-α-cyano-β,β-diphenylacrylate, and methyl -2-cyano-3-methyl-3-(p-methoxyphenyl)acrylate; and triaryltriazine compounds such as 2-(2-hydroxy-4-octoxyphenyl)-4,6-bis(2,4-di-*tert*-butylphenyl)-s-triazine, 2-(2-hydroxy-4-methoxyphenyl)-4,6-diphenyl-s-triazine, 2-(2-hydroxy-4-propoxy-5-methylphenyl)-4,6-bis(2,4-di-*tert*-butylphenyl)-s-triazine. The proportion of the UV-absorbing agent is preferably 0.001-10 parts by weight, and more preferably 0.05-5 parts by weight per 100 parts of the polyolefin type resin.

Illustrative of the aforesaid other hindered amine compounds are, for example, 1-oxy-2,2,6,6-tetramethyl-4-piperidinol, bis(2,2,6,6-tetramethyl-4-piperidyl) sebacate, bis(1,2,2,6,6-pentamethyl-4-piperidyl)sebacate, bis(1-octoxy -2,2,6,6-tetramethyl-4-piperidyl)sebacate, tetrakis(2,2,6,6 -tetramethyl-4-piperidyl)butanetetracarboxylate, tetrakis(1,2,2,6,6-pentamethyl-4-piperidyl)butanetetracarboxylate, bis(2,2,6,6-tetramethyl-4-piperidyl)di(tridecyl)-1,2,3,4-butanetetracarboxylate, bis(1,2,2,6,6-pentamethyl-4-piperidyl) di(tridecyl)-1,2,3,4-butanetetracarboxylate, 1,9-bis[2,2-dimethyl-2-{tris(2,2,6,6-tetramethyl-4-piperidyloxycarbonyl) butanecarboxyl}ethyl]-2,4,8,10-tetraoxa-spiro[5.5]undecane, 1,9-bis[2,2-dimethyl-2-{tris(1,2,2,6,6-pentamethyl-4-piperidyloxycarbonyl)butanecarboxyl}ethyl]-2,4,8,10-tetraoxa-spiro[5.5]undecane, bis(1,2,2,6,6-pentamethyl-4-piperidyl)-2-butyl-2-(3,5-di-*tert*-butyl-4-hydroxybenzyl) malonate, a polycondensate of 1-(2-hydroxyethyl)-2,2,6,6-tetramethyl-4-piperidinol/diethylsuccinate, a polycondensate of 1,6-bis(2,2,6,6-tetramethyl-4-piperidylamino)hexane/dibromoethane, a polycondensate of 1,6-bis(2,2,6,6-tetramethyl-4-piperidyl amino)hexane/2,4-dichloro-6-morpholino-s-triazine, a polycondensate of 1,6-bis(2,2,6,6-tetramethyl-4-piperidyl amino)hexane/2,4-dichloro-6-*tert*-octylamino-s-triazine, 1,5,8,12-tetrakis[2,4-bis{N-butyl-N-(2,2,6,6-tetramethyl-4-piperidyl)amino}-s-triazin-6-yl]-1,5,8,12-tetraazadodecane, 1,5,8,12-tetrakis[2,4-bis{N-butyl-N-(1,2,2,6,6-pentamethyl-4-piperidyl)amino}-s-triazin-6-yl]-1,5,8,12-tetraazadodecane, 1,6,11-tris[2,4-bis{N-butyl-N-(2,2,6,6-tetramethyl-4-piperidyl)amino}-s-triazin-6-yl]aminoundecane, and 1,6,11-tris[2,4-bis{N-butyl-N-(1,2,2,6,6-pentamethyl-4-piperidyl) amino}-s-triazin-6-yl]aminoundecane.

Illustrative of the aforesaid nucleating agents are metal salts of aromatic carboxylates such as aluminum p-*tert*-butyl-benzoate, and sodium benzoate; metal salts of acidic phosphate esters such as sodium bis(2,4-di-*tert-*butylphenyl)phosphate, lithium bis(2,4-di-*tert*-butylphenyl) phosphate, and sodium 2,2'-methylene-bis(4,6-di- *tert*-butyl phenyl)phosphate; and polyhydric alcohol derivatives such as dibenzylidene-sorbitol and bis(methylbenzylidene)sorbitol.

Illustrative of the aforesaid fire retardants are halogen type fire retardants; phosphorus type fire retardants such as red phosphorus, melamine phosphate, guanidine phosphate, phosphoric acid ester compounds, and phosphazene compounds; nitrogen type fire retardants such as melamine cyanurate; and metal hydroxides such as magnesium hydroxide, and aluminum hydroxide. Illustrative of the fire retardant assistants are inorganic compounds such as antimony trioxide and zinc borate, drip-preventing agent such as polytetrafluoroethylene.

The hydrotalcites may be natural ones or synthetic ones and can be employed irrespective of presence or absence of surface treatment and water of crystallization. Illustrative of the hydrotalcites are, for example, basic carbonates of the following general formula (III):

MₓMg_{y}Al_{z}CO₃(OH)_{xp+2y+3z -2}·nH₂O (III)

wherein M stands for an alkali metal or zinc, x stands for a number of 0-6, y for a number of 0-6, z stands for a number of 0.1-4, p stands for a valence of M, and n for a number of water of crystallization from 0 to 100.

Illustrative of the lubricants are fatty acid amides such as laurylamide, myristylamide, laurylamide, stearylamide, and behenylamide; ethylene-bis-stearylamide; polyethylene wax; metal soaps such as calcium stearate, and magnesium stearate; and metal phosphoric esters such as magnesium distearylphosphoric ester, and magnesium stearylphosphoric ester.

Illustrative of the fillers are inorganic materials such as talc, silica, and calcium carbonate. The grain diameter in case of spherical materials, and the fiber diameter, the fiber length and the aspect ratio in case of fibrous materials are suitably selected and used. If necessary, the fillers are preferably subjected to surface treatment before use.

### Examples

The present invention will now be illustrated more in detail by way of Examples.

### Example and Comparative Examples 1-5

### Stabilization of polypropylene

The test pieces of 60 mmx20 mm × 1 mm were prepared by incorporating 100 parts by weight of a block polypropylene resin (MFR=25, density=0.9 g/cm³, flexural modules: 950MPa) with 3.0 parts by weight of an aluminum pigment master batch (METAX G , manufactured by Toyo Aluminum Co., Ltd.), 3.0 parts by weight of a carbon black master batch (PEX999017, manufactured by Tokyo Ink Co., Ltd.), 0.1 part by weight of calcium stearate, 0.1 part by weight of tetrakis{3-(3,5-di-*tert*-butyl-4-hydroxyphenyl)propionyloxymethyl}methane, 0.05 parts by weight of tris(2,4-di-*tert*-butylphenyl) phosphite, 0.1 part by weight of 2-(2-hydroxy-3-*tert*-butyl-5-methylphenyl)-5-chlorobenzotriazole and a resin additive in accordance with the proportion as described in the following Table 1, extruding and processing the blend at 250°C into pellets, and then subjecting the pellets to injection molding. By the way, the proportion in the table stands for a part by weight per 100 parts by weight of the polyolefin type resin.

Using a Sunshine weather-o-meter, the time period of the resultant test pieces was measured under the raining test condition at 83°C (sprinkling of ion exchanged water: 18 minutes/120 minutes) until the test pieces were whitened whereby the weather-resisting property was evaluated. The results obtained are also shown in Table 1.

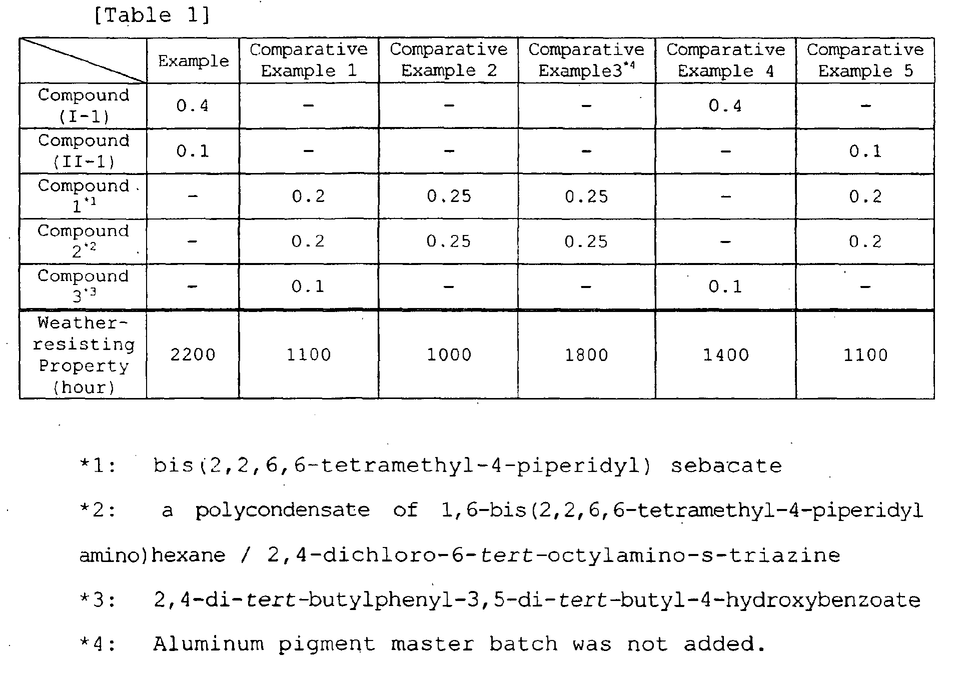

From the test result of Comparative Examples 2 and 3, it is noted that the polyolefin type resin was seriously deteriorated in weather-resisting property by incorporating it with the aluminum pigment. Also noted from the result of test result of Comparative Examples 1 and 2 is that the polyolefin type resin containing the aluminum pigment is slight in improvement in weather-resisting property even in the event that the resin is incorporated with the hindered amine compound and the benzoate type compound. From the test result of Example and Comparative Examples 1, 4 and 5, on the other hand, it is understood that the resin composition containing the aluminum pigment of the present invention, or in other words, the resin composition jointly incorporated with the specific hindered amine compound and the specific benzoate compound exhibits a synergistic effect which is never thought out from the effect achieved by a resin composition incorporated singly or independently with these compounds. It is thus noted that the resin composition of the present invention shows excellent weather-resisting property even in case the composition has been incorporated with an aluminum pigment.

## Claims

1. A resin composition containing an aluminium pigment, which comprises 100 parts by weight of a polyolefin type resin incorporated with 0.5-10 parts by weight of an aluminum pigment to produce a metallic composition, the metallic composition having further been incorporated with 0.001-10 parts by weight of a hindered amine compound of the following general formula: 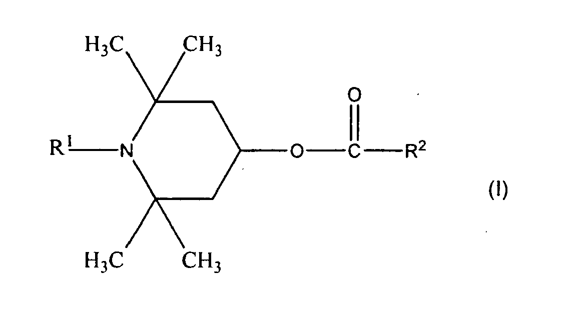 Wherein R¹ stands for hydrogen atom, hydroxy group, alkyl group having 1-30 carbon atoms, hydroxyalkyl group having 1-30 carbon atoms, alkoxy group having 1-30 carbon atoms, hydoxyalkoxy group having 1-30 carbon atoms, or any oxy radical, R² stands for alkyl group having 1-30 carbon atoms or alkenyl group having 2-30 carbon atoms, and 0.001-10 parts by weight of a benzoate type compound of the following general formula: 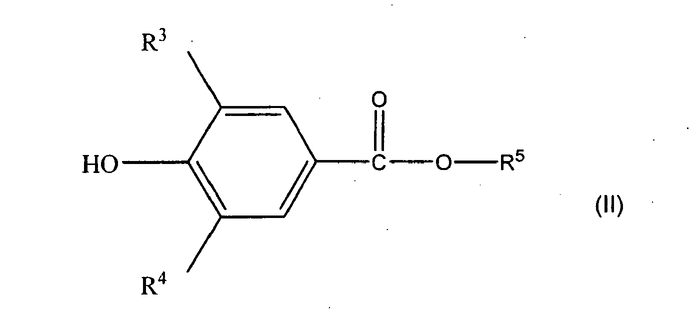 Wherein R³ and R⁴ each independently stands for hydrogen atom, alkyl group having 1-12 carbon atoms, or arylalkyl group having 7-30 carbon atoms, and R⁵ stands for alkyl group having 1-30 carbon atoms.

2. The resin composition containing an aluminum pigment according to claim 1, wherein R² stands for alkyl group having 12-22 carbon atoms.

3. The resin composition containing an aluminum pigment according to claim 1 or 2, wherein R⁵ stands for alkyl group having 6-24 carbon atoms.

4. A resin composition according to any preceding claim in which the polyolefin type resin is selected from hompolymers and copolymers of α-olefins such as polypropylene, low density polyethylene, polybutene-1, poly-3-methylpentene, poly-4-methylpentene, and ethylene-propylene copolymer, and copolymers of these α-olefins with compound having plural unsaturated bonds such as conjugated dienes and non-conjugated dienes.

5. A resin composition according to any of claims 1 to 4 which is a coating on the exterior surface of an automobile.

## Patentansprüche

1. Eine ein Aluminiumpigment enthaltende Harzzusammensetzung, die sich zu 100 Gewichtsteilen aus einem Harz vom Polyolefintyp zusammensetzt, in das 0,5-10 Gewichtsteile eines Aluminiumpigments inkorporiert wurden, um eine metallische Zusammensetzung zu liefern, wobei in die metallische Zusammensetzung wiederum 0.001-10 Gewichtsteile einer gehinderten Aminzusammensetzung der folgenden allgemeinen Formel inkorporiert wurden: 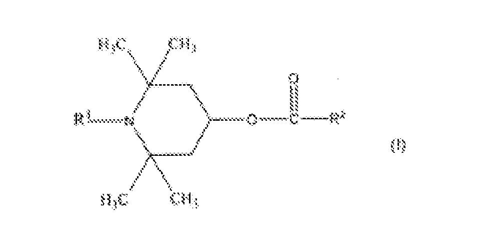 wobei R¹ für Wasserstoffatom, Hydroxygruppe, Alkylgruppe mit 1-30 Kohlenstoffatomen, Hydroxyalkylgruppe mit 1-30 Kohlenstoffatomen, Alkoxygruppe mit 1-30 Kohlenstoffatomen, Hydroxyalkoxygruppe mit 1-30 Kohlenstoffatomen oder ein jegliches Oxyradikal, R² für Alkylgruppe mit 1-30 Kohlenstoffatomen oder Alkenylgruppe mit 2-30 Kohlenstoffatomen stehen, und 0,001-10 Gewichtsteilen einer benzoatartigen Verbindung mit der folgenden allgemeinen Formel inkorporiert wurden: 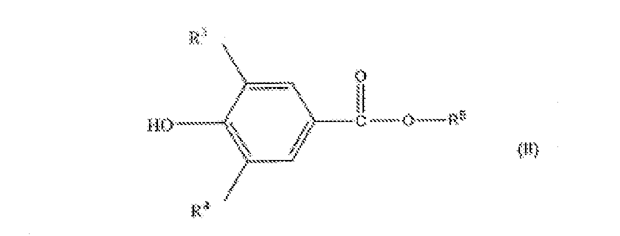 wobei R³ und R⁴ jeweils unabhängig für Wasserstoffatom, Alkylgruppe mit 1-12 Kohlenstoffatomen oder Arylalkylgruppe mit 7-30 Kohlenstoffatomen und R⁵ für Alkylgruppe mit 1-30 Kohlenstoffatomen stehen.

2. Die ein Aluminiumpigment enthaltende Harzzusammensetzung entsprechend Anspruch 1, wobei R² für eine Alkylgruppe mit 12-22 Kohlenstoffatomen steht.

3. Die ein Aluminiumpigment enthaltende Harzzusammensetzung entsprechend Anspruch 1 oder 2, wobei R⁵ für eine Alkylgruppe mit 6-24 Kohlenstoffatomen steht.

4. Eine Harzzusammensetzung entsprechend einem der vorangegangenen Ansprüche, wobei das Harz vom Polyolefintyp aus Homopolymeren und Kopolymeren eines α-Olefins ausgewählt wird, wie z.B. Polypropylen mit niedriger Dichte, Polybuten-1, Poly-3-methylpenten, Poly-4-Methylpenten und Ethylen-propylenkopolymer und Kopolymeren dieser α-Olefine mit einer Zusammensetzung mit mehreren ungesättigten Verbindungen, wie z.B. konjugierte Diene und nicht konjugierte Diene.

5. Eine Harzzusammensetzung entsprechend einem der Ansprüche 1 bis 4, die eine Beschichtung der Außenoberfläche eines Kraftfahrzeugs ist.

## Revendications

1. Composition de résine contenant un pigment à base d'aluminium, qui contient 100 parties en poids d'une résine de type polyoléfine incorporée à 0,5 à 10 parties en poids d'un pigment à base d'aluminium pour produire une composition métallique, cette dernière ayant en outre été incorporée à 0,001 à 10 parties en poids d'un composé à amine entravée de la formule générale suivante : 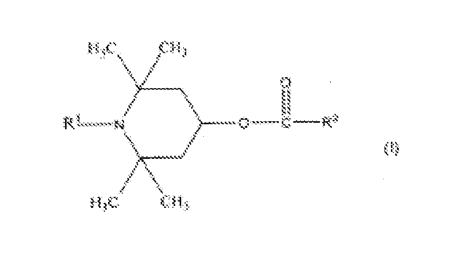 Dans laquelle R¹ désigne un atome d'hydrogène, un groupe hydroxy, un groupe alkyle contenant 1 à 30 atomes de carbone, un groupe hydroxyalkyle contenant 1 à 30 atomes de carbone, un groupe alkoxy contenant 1 à 30 atomes de carbone, un groupe hydroxyalkoxy contenant 1 à 30 atomes de carbone ou un radical oxy quelconque, R² désigne un groupe alkyle contenant 1 à 30 atomes de carbone ou un groupe alkényle contenant 2 à 30 atomes de carbone et 0,001 à 10 parties en poids d'un composé de type benzoate de la formule générale suivante : 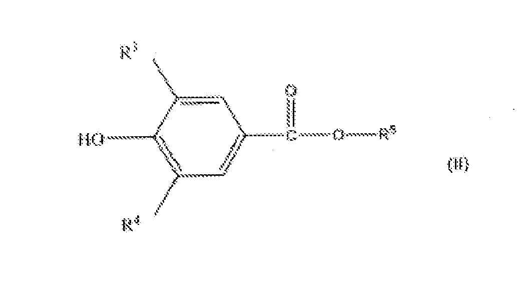 Dans laquelle R³ et R⁴ désignent chacun indépendamment un atome d'hydrogène, un groupe alkyle contenant 1 à 12 atomes de carbone ou un groupe arylalkyle contenant 7 à 30 atomes de carbone et R⁵ désigne un groupe alkyle contenant 1 à 30 atomes de carbone.

2. Composition de résine renfermant un pigment à base d'aluminium selon la revendication 1, dans laquelle R² désigne un groupe alkyle contenant 12 à 22 atomes de carbone.

3. Composition de résine renfermant un pigment à base d'aluminium selon la revendication 1 ou 2, dans laquelle R⁵ désigne un groupe alkyle contenant 6 à 24 atomes de carbone.

4. Composition de résine selon l'une quelconque des revendications précédentes, dans laquelle la résine de type polyoléfine est sélectionnée parmi des homopolymères et des copolymères d'α-oléines tels que le polypropylène, le polyéthylène de faible densité, le polybutène-1, le poly-3-méthylpentène, le poly-4-méthylpentène et le copolymère d'éthylène-propylène et des copolymères de ces α-oléfines contenant un composé ayant des liaisons non saturées plurales telles que celles formées par des diènes conjugués et des diènes non conjugués.

5. Composition de résine selon l'une quelconque des revendications 1 à 4, qui est un revêtement posé sur la surface externe d'une automobile.
